# EUROPEAN PATENT APPLICATION

(11) **EP 1 950 154 A1**
(43) Date of publication of application: **30.07.2008**
(21) Application number: 08001234.7
(22) Date of filing: 23.01.2008
(51) Int. Cl.: B65G 53/46

(54) **Rotary valve assembly**

(30) Priority: 25.01.2007 US 698017
(71) Applicant: United Conveyor Corporation, Waukegan IL 60085 (US)
(72) Inventor: Weenum, Larry Jon, El Grove Village IL 60020 (US); Beloiu, Alexandru S., Rolling Meadows IL 60008 (US); LeDain, Robert J., Fox Lake IL 60020 (US); Charhut, Daniel E., Lake Bluff IL 60044 (US)
(74) Representative: Casey, Lindsay Joseph

(57) **Abstract**

An improved abrasion resistant rotor assembly (10) and valve and system related thereto is disclosed. The assembly includes a rotor body (12) defining an annular opening which surrounds a drive shaft (18) and a plurality of vanes (16) radially extending tirom the rotor body. The rotor (12) is made up of a unitary ceramic component, such as silicon carbide.

The valve also includes a body (26) for defining a bore (28) that receives the rotor assembly (10), where the body bore is likewise comprised of a hardened ceramic material. This valve may thus be used to convey abrasive particulate in an efficient manner from a supply container to a pressured line for further processing or disposal.

## Description

### Field of Invention

The present invention relates to rotary valves and an assembly related thereto for handling abrasive materials which is characterized by the use of a plurality of vanes that are made out of a unitary ceramic composition. More specifically, the present invention relates to the use of a unitary ceramic composition for vanes in a rotary valve or similar device comprised of a ceramic composition having a high hardness value, such as silicon carbide. A preferred embodiment of a system including the features of the claimed invention would include a blower or similar device for creating a pressure differential across a rotary valve with vanes comprising a unitary ceramic component.

### Background of the Invention

Rotary valve assemblies are integral components for handling particulates in a variety of industrial applications, including but not limited to cement, limestone, chemical processing, food processing and coal fired power plant operations. In the past, certain particulates, such as fly ash produced from coal combustion, were simply taken up by flue gases and dispersed into the atmosphere. This created significant environmental concerns and health risks. These days, most power plants are required by law to reduce their fly ash emissions to less than 1% of ash produced. Thus, there is a need to provide the efficient removal of particulate from a variety of applications. Additionally, environmental laws are requiring reductions in sulfur emissions from power plants. Most reduction methods involve the use of limestone, an abrasive bulk material. Limestone is commonly handled using pneumatic conveying systems which employ rotary valves. Failure of a rotary valve can result in non-compliance with environmental permits and the plants must be shut down or limit load to stay within permitted levels.

Rotary valve assemblies have been used as a part of the solution to process such particulates as an airlock. The rotary valve acts like a revolving door inside a casing, with the revolving door typically spinning around a horizontal axis. The rotary valve is typically placed between a lower pressure bin or hopper and a higher pressure pipe or conduit. The goal in such an application is to transfer the particulate from the bin to the pipe (where it is transferred to subsequent collection and processing or disposal), but without leakage of air back into the bin. Thus, the rotary valves used in such airlock applications have a narrow gap between the vanes of the rotary valve and the valve casing.

However, when the particulate being handled is fine and/or abrasive, additional problems must be addressed. The pressurized line is a pneumatic conveyor which is capable of delivering high pressures to move large quantities of bulk materials. The high pressures can drive the abrasive particulates through the narrow gaps between the rotor and valve casing, at high velocities, eroding the rotary valve assembly, reducing the efficiency of the rotary valve and shortening or ending its effective lifespan, resulting in a loss of total pneumatic conveying system functionality or reduced system capacity. Thus, a problem exists in maintaining the efficiency of rotary valve assemblies in abrasive operating environments.

### Description of the Prior Art

A variety of approaches has been tried previously with limited success, and with the creation of separate problems in the upkeep of rotary valve assemblies in the field. One such approach is the use of a "shoe" or adjustable member on the casing to create a user-adjustable gap between the rotary valve and the casing or body. The gap can be adjusted or narrowed as the vane and the casing start to wear. Similar minded designs use an adjustable rotor, where the centerline of the rotor can be adjusted to compensate for wear. However, such approaches have a variety of limitations. First, the use of an adjustable shoe or rotor limits the sealing area of the valve to approximately 120 degrees of the rotor circumference. This limit reduces the number of vanes which can be used in a rotor design to prevent air leakage through the valve. Second, the body or casing and rotor wear is caused by abrasion. Abrasive wear, especially in a sealing application such as an airlock, is never smooth. Instead, the wear is typically in the form of "wire draw," which looks like grooving on the sealing surface. The adjustable shoe and rotor designs are dependent upon a smooth or uniform wear on the sealing surfaces, and thus cannot compensate for this type of wear. Third, the adjustable rotor/shoe approach is dependent upon continuous preventative maintenance to maintain proper operating efficiency. If the valve clearance is not checked on a regular basis, it will wear out and eventually fail. Such maintenance may be time consuming and highly undesirable depending upon the nature of the processing involved.

Another approach for dealing with abrasion problems is the use of harder materials on the vane and shroud tips of the assembly, through the application of attached hard iron or steel alloy edges, or through the attachment of tiles comprising various, ceramics or carbides. Such an approach reduces the wear rate of the mating components in the valve. However, this approach also has a variety of drawbacks. First, component wear is caused by air leakage through the valve due to differential pressure. The leaking air picks up the abrasive particles being conveyed in the system and draws the particles past the vane and shroud tip surfaces in the valves. The hard particles in the air stream impact the surfaces of the vanes themselves, causing wear beyond the vane and shroud tips. Second, the use of cast iron or steel edges that are modified with different alloys to improve hardness are of limited lifespan in abrasive environments because the microstructure and overall hardness of such materials provide limited wear resistance. Third, while the known use of ceramics and carbides in such applications (typically alumina and tungsten carbide tiles) result in harder and more abrasion resistance than the iron alloys listed above, such an approach still requires the tiles to be mounted to the cast iron body and steel rotor with different types of adhesive. The unprotected joints between the tiles are prone to abrasive failure. This has especially been seen at the joint between the rotor tips and the rotor sidewalls. The adhesives used to mount the tiles also can fail from temperature or by failure of bond to the smooth ceramic surface. Additionally, while alumina is significantly harder than the iron alloys listed above, the inventors of the present invention have found that there are materials such as silicon carbide that perform better in high velocity, abrasive environments, and when cast into a one piece unitary rotor can offer improved performance at a more economical cost.

### Definition of Terms

The following terms are used in the claims of the patent as filed and are intended to have their broadest plain and ordinary meaning consistent with the requirements of law.

Body: this refers to the casing or shroud which generally surrounds the circumference to the rotor, although various openings may exist, such as openings to a bin, pipe, conduit or other source or destination for particulate, or a vent for pressure release or other openings as needed.

Rotor: this generally refers to a body which surrounds a rotating shaft and a number of vanes extending generally radially from the body, although it should be understood that the term "rotor" or "rotors" may also be referring to the vane or vanes, depending upon context.

Mohs Hardness Value: a value which characterizes the scratch resistance of various minerals through the ability of a harder material to scratch a softer material. It is one of several known definitions of hardness in materials science, and may be translated over to other known scales. It is an objective measure for the hardness of various materials used to accomplish the goals of the present invention.

Where alternative meanings are possible, the broadest meaning is intended. All words used in the claims set forth below are intended to be used in the normal, customary usage of grammar and the English language.

### Objects and Summary of the Invention

According to an aspect of the present invention, there is provided a rotor assembly as specified in claim 1. According to another aspect of the present invention, there is provided a rotary valve as specified in claim 3. According to another aspect of the present invention there is provided a system for handling abrasive materials as specified in claim 6.

The invention is also directed to a method by which the described assembly or valve or system operates and including method steps for carrying out every function of the assembly or valve or system.
The apparatus of the present invention generally comprises a rotor assembly for handling of an abrasive material. The rotor assembly comprises a shaft for driving the rotor, while the rotor itself comprises a rotor body with a bore for surrounding the shaft circumference, and a number of vanes projecting radially from the rotor body. The assembly further includes a collar assembly for mating the rotor to the shaft. Furthermore, the rotor is formed as a unitary ceramic component having a Mohs hardness value of at least about 9. A further application of the present invention in the context of a rotary valve would include the valve assembly discussed above in combination with a body which creates an annular bore for receiving the rotor and the surface of the body bore is comprised of at least one unitary ceramic component which covers at least one of the rotor pockets (i.e., the space between two adjacent vanes). Still another application of the present invention in the context of an abrasive handling material system would include the rotary valve in combination with a blower, compressor or other means to supply a pressure differential to the valve. In addition, the system would include a bin or similar abrasive supply container communicating with the valve to supply particulate to be processed, and a motor or similar drive means for rotating the rotor and a vent for releasing pressure in the rotary valve.

As can be shown from the discussions above, an object of the present invention is to provide an improved wear life system efficiency which is maintained for a greater duration of time.

A further object of the present invention is to provide a rotary valve with increased durability and decreased maintenance time or down time.

Still yet another object of the present invention is to provide a rotor with a less complex design having improved abrasion resistance.

These and other objects, features, and advantages of the present invention will become more apparent in light of the following detailed description of a best mode embodiment thereof, and as illustrated in the accompanying drawings

### Brief Description of the Drawings

Figure 1 shows a side view of a rotor assembly embodiment of the present invention, with exploded detail showing the engagement of the collar assembly and the rotor.
Figure 2 shows a cross sectional view of the rotor body and vanes from figure 1.
Figures 3a and 3b show cross sections of the rotary valve assembly and body.
Figures 4a-4c show front, side and top views, respectively, for an embodiment of a rotary valve of the present invention in combination with a reduction gear motor for driving the valve.
Figure 5 shows an example schematic of a system using a rotary airlock in a type of application suitable for the present invention.

### Detailed Description of the Invention

Set forth below is a description of what is currently believed to be the preferred embodiment or best examples of the invention. Future and present alternatives and modifications to this preferred embodiment are contemplated. Any alternatives or modifications which make insubstantial changes in function, in purpose, in structure or in result are intended to be covered by the claims in this patent.

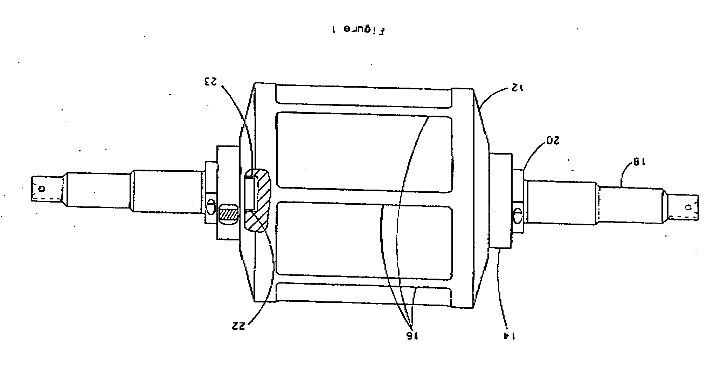

Referring now to Figure 1, the rotor assembly 10 of an embodiment of the present invention is preferably comprised of a rotor 12 with vanes 16. The rotor 12 is most preferably constructed out of a unitary piece of silicon carbide. Although other ceramics having a similar hardness are believed to be within the scope of the present invention for example, other carbide compounds having a Mohs hardness value of about 9 or greater. The other major components of the rotor assembly are a shaft 18 and a collar assembly such as a collar clamp 20 and a driver 14. The collar clamp 20 and driver 14 attach the shaft 18 to the rotor 12. The collar clamp 20 accomplishes this attachment by virtue of a friction fit around the circumference of the shaft 18 and by virtue of a key 22 or detent which is mated with a pocket 23 cast into the rotor 12. Of course, those of ordinary skill will understand that alternative means for operatively connecting the shaft 18 and the rotor 12 may be used, such as various adhesives with or without mechanical connectors, such alternative designs being understood by those skilled in the art.

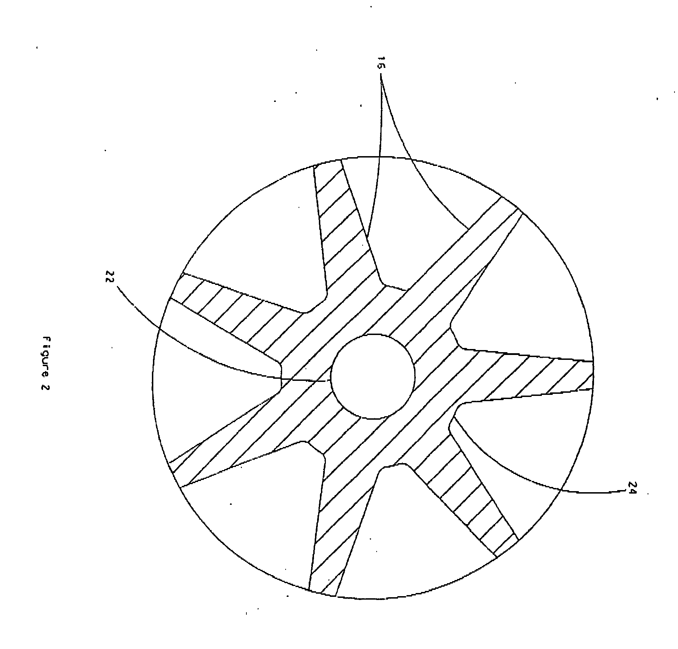

Referring now to Figure 2, the rotor 12 defines a bore 22 which is generally annular in nature and surrounds and runs along the length of the shaft 18. The vanes 16 extend generally radially outward from shaft 18 and rotor 12, with each pair of adjacent vanes 16 generally defining a pocket 24 there between. It should be noted that in preferred embodiments using silicon carbide and similar materials, a rotor 12 having the same overall size as comparable prior art rotors would generally have smaller pockets 24 and thicker vanes 16 than such prior art rotors to compensate for the brittleness and the lack of ductility of the ceramics that are preferably used with the present invention. At first blush, such a design might not be chosen because of the perceived lower efficiency of a valve using such smaller pockets. However, based upon the inventors' work to date, it is believed that the lower wear and lack of down time or maintenance time for such a design would more than compensate to create a greater efficiency valve over the entire life span of the rotor assembly 10.

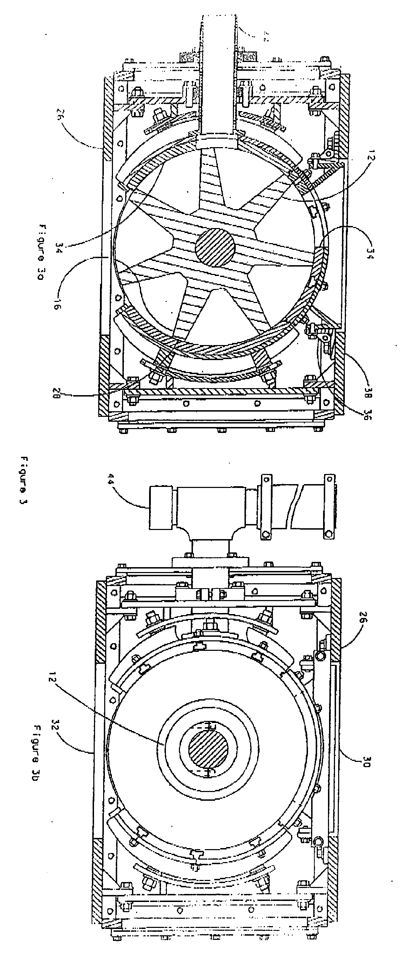

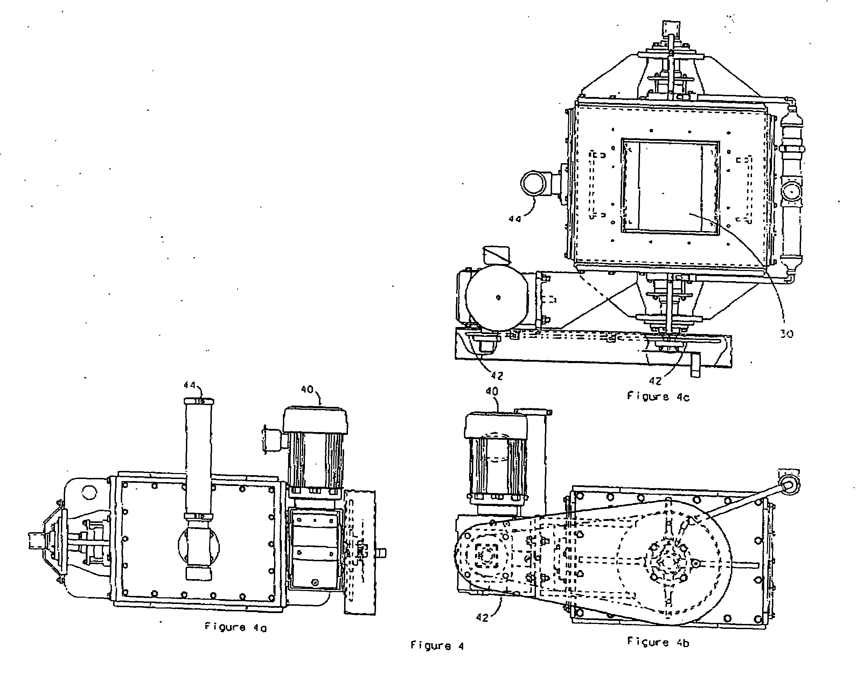

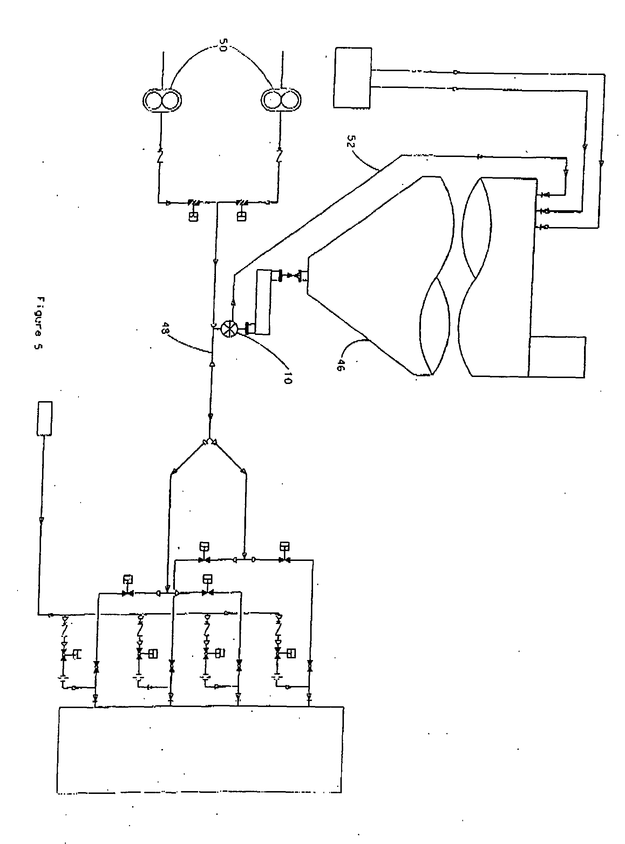

Referring now to Figure 3, the rotor 12 is placed *in situ* into a body 26, which is also known as a shroud or casing. The body 26 defines a body bore 28 which is generally annular in nature and is sized to fit the rotor 12 with minimum clearance between the vanes 16 and the bore 28. The body 26 further includes and defines a top opening 30 and an outlet 32 for supplying and receiving respectively the particulate processed by the rotor assembly 10. Furthermore, the body bore 28 is most preferably comprised of multiple ceramic segments 34 extending around the circumference of the body bore 28, where at least one of the segments 34 is of sufficient arc length so as to cover the entirety of a pocket 24 (i.e., from vane tip to vane tip). Also, the body bore 28 is most preferably comprised of segments 34 made of the same or similar hardened ceramic material as used by the rotor 12. In one preferred embodiment, the segments 34 are fastened to brackets 36 which are mounted on walls 38 of the body. Referring now to Figures 4 and 5, the rotor assembly 10 is driven through the use of a motor 40 connected to the shaft 18. A preferred embodiment involves the use of a reduction gear 42 to operatively connect motor 40 to shaft 18, but those of ordinary skill will understand that various other drive means are equally acceptable to drive the rotor 12 of the present invention. Furthermore, the rotary valve of the present invention may further include a vent 44 to alleviate pressure within and around the rotor assembly 10. The system employing the rotary valve assembly 10 of the present invention will typically include a storage bin 46 for receiving particulate (e.g., limestone, flyash or similar abrasive materials). The material received from the storage bin 46 is at a lower pressure level than the pressurized line 48 which receives the output of the rotary valve assembly 10. The pressurized line 48 is typically driven or pressurized by one or more blowers 50 which can drive or push the particulate to a different location for further processing or disposal. The vent 44 may further include a vent line 52 for the particulate-laden air vented from the system to be recirculated into the storage bin 46.

The above description is not intended to limit the meaning of the words used in the following claims that define the invention. Rather, it is contemplated that future modification in structure, function or result will exist that are not substantial changes and that all such insubstantial changes in what is claimed are intended to be covered by the claims. For instance, the selection of a particular number of vanes in the rotor assembly is for illustrative purposes with reference to the example drawings only. Likewise, it will be appreciated by those skilled in the art that various changes, additions, omissions, and modifications can be made to the illustrated embodiments without departing from the spirit of the present invention. All such modifications and changes are intended to be covered by the following claims.

## Claims

1. A rotor assembly for facilitating the handling of an abrasive material, said rotor comprising:
a) a shaft for driving said rotor;
a rotor including a rotor body defining an annular bore for surrounding the circumference of said shaft;
b) a plurality of vanes projecting radially from said rotor body; and
c) a collar assembly for mating said rotor to said shaft;
wherein said vanes comprise a unitary ceramic component having a Mohs hardness value of at least about 9.

2. The assembly of claim 1, wherein said vanes are comprised of silicon carbide.

3. A rotary valve for facilitating the handling of an abrasive material, said valve comprising:
a) a shaft for driving said rotor;
a rotor body defining an annular bore for surrounding the circumference of said shaft;
b) a plurality of vanes projecting radially from said rotor body, said vanes defining a plurality of pockets extending around the circumference of said shaft, wherein said vanes are a single ceramic component having a Mohs hardness value of at least about 9;
c) a collar assembly for mating said vanes to said shaft; and
d) a body defining an annular bore for receiving the rotor therein, wherein the surface of said bore is comprised of at least one unitary ceramic component covering substantially all of at least one of said pockets.

4. The valve of claim 3, wherein said vanes are comprised of silicon carbide.

5. The valve of claim 4, wherein said surface of said bore is comprised of silicon carbide.

6. A system for handling abrasive materials, said system comprising:
a) a rotary valve, said valve having vanes comprising a unitary ceramic component;
b) pressure differential means operatively connected to said valve;
c) an abrasive supply container communicating with said valve;
d) drive means for rotating the rotor of said rotary valve; and
e) a vent for releasing pressure in said valve;
whereby the unitary ceramic component enables an improved wear life system efficiency which is maintained for a greater duration of time.

7. The system of claim 6, wherein the unitary ceramic component is comprised of silicon carbide.
